# EUROPÄISCHE PATENTSCHRIFT

(11) **EP 2 750 941 B1**
(45) Veröffentlichungstag und Bekanntmachung des Hinweises auf die Patenterteilung: **18.07.2018**
(21) Anmeldenummer: 12746090.5
(22) Anmeldetag: 10.08.2012
(51) Int. Cl.: B60T 1/10, B60W 30/18

(54) **VERFAHREN ZUR STEUERUNG EINER VERZÖGERUNGSANORDNUNG EINES KRAFTFAHRZEUGS**
METHOD FOR CONTROLLING A DECELERATION ARRANGEMENT OF A MOTOR VEHICLE
PROCÉDÉ DE COMMANDE D'UN ENSEMBLE DE DÉCÉLÉRATION D'UN VÉHICULE AUTOMOBILE

(30) Priorität: 29.08.2011 DE 102011081724
(43) Veröffentlichungstag der Anmeldung: 09.07.2014
(73) Patentinhaber: Robert Bosch GmbH, 70442 Stuttgart (DE)
(72) Erfinder: SCHULER, Ralf, 73207 Plochingen (DE); KOBIELA, Fanny, 74399 Walheim (DE); STUETZLE, Rupert, 70192 Stuttgart (DE)
(86) Internationale Anmeldenummer: PCT/EP2012/065693
(87) Internationale Veröffentlichungsnummer: WO 2013/029966

(56) Entgegenhaltungen:
- WO-A1-2005/115784
- DE-A1-102010 027 348
- DE-B4- 19 758 782
- DE-C1- 19 607 823

## Beschreibung

Die Erfindung betrifft ein Verfahren zur Steuerung einer Verzögerungsanordnung eines Kraftfahrzeugs, sowie eine Steuervorrichtung, die dazu ausgelegt ist, ein solches Verfahren durchzuführen.

### Stand der Technik

Es ist bereits bekannt, bei Hybridfahrzeugen oder rein elektrisch angetriebenen Fahrzeugen während Bremsvorgängen kinetische Energie durch einen generatorischen Betrieb der elektrischen Maschine zurückzugewinnen und eine Batterie mit dieser Energie zu laden (Rekuperation). Hierbei erzeugt die elektrische Maschine ein negatives Antriebsmoment, d.h. sie arbeitet als Generator. In dem Fall, in dem die elektrische Maschine weder ein positives noch ein negatives Vortriebsmoment erzeugt, wird das Kraftfahrzeug nicht nach vorn angetrieben und ausschließlich aufgrund externer Einflüsse (z.B. Luft-, Rollwiderstand, Fahrbahnsteigung) beschleunigt oder abgebremst (dieses Phänomen wird in der englischen Literatur als "free wheeling" bezeichnet). Bei einem negativen Vortriebsmoment kann das Moment der Rekuperation, für den Fahrer wahrnehmbar, als Ausmaß der Fahrzeugverzögerung geregelt werden.

In modernen Kraftfahrzeugen sind verschiedene Betriebskonzepte bekannt, wann die elektrische Maschine als Generator betrieben wird. So sind bspw. Fahrzeuge bekannt, bei denen in festen vorgegeben groben Stufen rekuperiert wird. Wenn das Fahrpedal los gelassen wird, wird eine Rekuperation mit vorgegebenem Antriebsmoment ausgelöst (dieses hängt z.B. vom Fahrmodus ab, der beispielweise ein sportlicher, ein komfortabler oder ein ökologischer Fahrmodus sein kann).

Ferner sind Kraftfahrzeuge bekannt, bei denen das rekuperative Moment vom Fahrer mittels Schalter manuell eingestellt werden kann. Das rekuperative Moment wird beim Loslassen des Fahrpedals eingestellt (solange das Bremspedal nicht betätigt wird). Eine Rekuperation wird erst eingeleitet, wenn das Fahrpedal vollständig losgelassen wird. Bei einer Bremspedalbetätigung wird das rekuperative Moment zusätzlich erhöht bis das vordefinierte Rekuperationsmoment erreicht wird. Ab einem vorgegebenen Bremspedalweg wird darüber hinaus eine hydraulische Bremse aktiviert, welche das Bremsmoment weiter (additiv) erhöht.

Es sind schließlich Kraftfahrzeuge bekannt, bei denen die Rekuperation schon vor dem vollständigen Loslassen des Fahrpedals beginnt. Daraus folgt, dass das Kraftfahrzeug bei einer bestimmten Pedalstellung segelt (d.h. die elektrische Maschine erzeugt weder ein positives noch ein negatives Antriebsmoment), und der Fahrer das Ausmaß der Rekuperationsstärke über die Einstellung kleinerer Fahrpedalstellungen regulieren kann. Der genaue Fahrpedalweg, bei dem das Kraftfahrzeug segelt, kann dabei geschwindigkeitsabhängig sein. Bei höheren Geschwindigkeiten liegt dieser Punkt bei einer höheren Fahrpedalstellung. Der Grund hierfür liegt darin, dass sich die maximalen Antriebs- und Rekuperationsmomente drehzahl- und damit geschwindigkeitsabhängig ändern. Bei höherer Geschwindigkeit müssen Reibungsverluste in der elektrischen Maschine zunehmend kompensiert werden. Für den Fahrer hat dies zur Folge, dass er bei höheren Geschwindigkeiten einen längeren Fahrpedalweg zur Verfügung hat, um die Höhe der Rekuperation zu regeln.

Da beim regenerativen Bremsen und beim Antrieb des Kraftfahrzeugs über die elektrische Maschine ein möglichst hoher Wirkungsgrad erreicht werden soll, wird die elektrisch-regenerative Bremse mit einer oder mehreren Achsen des Kraftfahrzeugs verbunden. Bei einer solchen Anordnung wird eine möglichst geringe Reibung und damit ein höchst möglicher Wirkungsgrad erreicht. Mit anderen Worten wirkt die elektrisch-regenerative Bremse nur an derjenigen Achse, bspw. der Vorderachse, die auch von der elektrischen Maschine angetrieben wird. Je nach Bremssituation kann es zu einer unausgeglichenen und damit nicht idealen Verteilung der Bremsmomente auf die einzelnen Achsen kommen. Beispielsweise kann das Bremsmoment in einem Verhältnis auf die jeweilige Achse einwirken, das unproportional zum jeweiligen Gewicht auf die einzelnen Achsen ist. Eine unausgeglichene Bremskraftverteilung wiederum kann die Fahrdynamik bzw. die Steuerbarkeit des Kraftfahrzeuges nachteilig beeinflussen. Bei Fahrzeugen mit einer rekuperativen Verzögerungsanordnung ist aufgrund des Wunsches, möglichst viel Bremsenergie zurückzugewinnen, mit besonders starken Auswirkungen auf die Fahrstabilität zu rechnen. Es besteht mit anderen Worten ein Zielkonflikt zwischen einerseits einer möglichen hohen Energierückgewinnung durch das rekuperative Bremsen und andererseits einer hohen Fahrstabilität während des Bremsvorgangs. Ein Verfahren zur Steuerung einer Verzögerungsanordnung eines Kraftfahrzeugs mit einer regenerativen Bremseinrichtung gemäß dem Oberbegriff des Anspruchs 1 ist aus dem Dokument DE 196 07 823 C1 bekannt.

### Offenbarung der Erfindung

Es wird daher erfindungsgemäß ein Verfahren bereitgestellt zur Steuerung einer Verzögerungsanordnung eines Kraftfahrzeugs mit wenigstens einer regenerativen Bremseinrichtung, gemäß dem unabhängigen Anspruch 1. Die regenerative Bremseinrichtung ist dazu ausgebildet, das Kraftfahrzeug mittels eines variablen Bremsmomentes zu verzögern und elektrische Energie entsprechend des Bremsmomentes zu erzeugen. Bei dem erfindungsgemäßen Verfahren wird eine Rücknahmegeschwindigkeit eines Bedienelementes zum Antreiben des Kraftfahrzeuges, insbesondere eines Fahrpedals erfasst. Bei dem erfindungsgemäßen Verfahren wird ferner ein vordefiniertes Bremsmoment von der regenerativen Bremseinrichtung ausgeübt, sofern die Rücknahmegeschwindigkeit und/oder eine damit korrelierende Größe einen vorbestimmten Schwellenwert über- oder unterschreitet.

Ferner wird erfindungsgemäß eine Steuervorrichtung zur Durchführung eines solchen Verfahrens bereitgestellt.

Das Kraftfahrzeug ist insbesondere ein Elektrofahrzeug. Unter dem Begriff "Elektrofahrzeug" sind im Wortlaut dieses Textes bspw. ausschließlich über elektrische Energie angetriebene Fahrzeuge, aber auch Hybridfahrzeuge zu verstehen, die Kombinationen von Elektromotoren mit Verbrennungskraftmaschinen oder Brennstoffzellen aufweisen. Unter dem Begriff "Fahrpedal" ist ein Bedienelement zu verstehen, das ein Fahrer betätigen und damit die Geschwindigkeit bzw. die Beschleunigung des Fahrzeugs einstellen kann.

### Vorteile der Erfindung

Mit der Erfindung wird ein möglichst hoher Wirkungsgrad erreicht. Der Fahrer kann durch Loslassen des Fahrpedals den Rekuperationsbetrieb einleiten und hat somit kein zusätzliches Bedienelement zur Aktivierung des Rekuperationsbetriebs zu betätigen. Dadurch kann ein verbesserter Bedienungskomfort ohne zusätzliches Bedienelement bereitgestellt werden.

Gemäß einer Ausgestaltung des erfindungsgemäßen Verfahrens wird das vordefinierte Bremsmoment entsprechend einer Fahrsituation des Kraftfahrzeugs bestimmt.

Dadurch können die Steuer- oder Regelalgorithmen einer das erfindungsgemäße Verfahren ausführenden Steuereinrichtung optimal auf die gegebenen Randbedingungen bzw. die spezifische Fahrsituation des Kraftfahrzeugs angepasst werden.

Bei einer Ausführungsform des erfindungsgemäßen Verfahrens wird das Kraftfahrzeug durch einen Elektromotor angetrieben. Dabei ist der Elektromotor als Bestandteil der regenerativen Bremseinrichtung zum Abbremsen des Kraftfahrzeugs als Generator betreibbar.

Das heißt, eine einzige elektrische Maschine kann als Antriebseinheit zum Antreiben des Kraftfahrzeugs oder als Generator zur Rekuperation von Energie betrieben werden. Diese Doppelfunktion erfordert kein zusätzliches Gerät und verringert so den Bauraum und die Kosten. Erfindungsgemäß wird ein maximales Bremsmoment von der regenerativen Bremseinrichtung erzeugt, sofern die Rücknahmegeschwindigkeit den vorbestimmten Schwellenwert überschreitet.

Dadurch kann beispielsweise in Notsituationen, wenn das Gaspedal sehr schnell zurückgenommen wird, der Bremsvorgang schnell und mit maximalem Bremsmoment eingeleitet werden, wodurch die Sicherheit erhöht werden kann. Nach dem erfindungsgemäßen Verfahren wird kein Bremsmoment von der regenerativen Bremseinrichtung erzeugt, sofern die Rücknahmegeschwindigkeit einen zweiten vordefinierten Schwellenwert unterschreitet. So kann z.B. in einem Schubbetrieb des Kraftfahrzeuges, also beim Ausrollen ein Rekuperationsmoment unterbunden werden, so dass die frei werdende kinetische Energie des Kraftfahrzeuges für die Überwindung eines längeren Ausrollweges verwendet werden kann. Diese Umwandlung von einer mechanischen Energieform in eine weitere mechanische Energieform hat einen besonders hohen Wirkungsgrad im Vergleich zur Umwandlung von kinetischer Energie in elektrische Energie. Erfindungsgemäß wird ein Bremsmoment von der regenerativen Bremseinrichtung zur Erzeugung von elektrischer Energie erzeugt, sofern die Rücknahmegeschwindigkeit den zweiten vordefinierten Schwellenwert unterschreitet und ein Bedienelement zum Verzögern des Kraftfahrzeugs, insbesondere ein Bremspedal, zum Bremsen des Kraftfahrzeugs betätigt wird.

Der Bedienung des Bremspedals wird somit eine gegenüber der Fahrpedalbetätigung höhere Priorität zugeordnet, so dass in jedem Fall die vom Fahrer beabsichtigte Gesamtbremswirkung erzeugt wird. Gemäß dem erfindungsgemäßen Verfahren ist der zweite vordefinierte Schwellenwert kleiner als der erste vordefinierte Schwellenwert.

Hierdurch wird der Bereich der Fahrpedalrücknahmegeschwindigkeit in drei Unterbereiche unterteilt. Durch die Abgrenzung zwischen den einzelnen Bereichen können unterschiedliche Bremsstrategien, bspw. eine wiedergewinnungsoptimierte und/oder eine verzögerungsoptimierte Bremsstrategie eingesetzt werden. Erfindungsgemäß wird das Bremsmoment in Abhängigkeit einer Stellung des Bedienelementes zum Antreiben des Kraftfahrzeuges variiert, sofern die Rücknahmegeschwindigkeit einen Wert aufweist, der zwischen dem ersten vordefinierten Schwellenwert und dem zweiten vordefinierten Schwellenwert liegt.

Hierdurch kann ohne ein zusätzliches Bedienelement der Fahrer vorteilhafterweise das Rekuperationsverhalten des Kraftfahrzeugs seinen Wünschen entsprechend steuern. Ferner liegt diesem Aspekt die Erkenntnis zugrunde, dass eine gegenüber einer normalen Fahrbetätigung signifikant höhere Rücknahmegeschwindigkeit des Fahrpedals als Kriterium für das Vorliegen einer Notbremssituation gewertet werden kann ist. Hierzu ist das erfindungsgemäße Verfahren in der Lage, frühzeitig - schon vor der Betätigung des Bremspedals - einen automatischen Bremsvorgang einzuleiten. So wird sichergestellt, dass in einer Gefahrensituation keine Zeit für den Bremsmomentenaufbau verlorengeht. Bei einer Ausführungsvariante des erfindungsgemäßen Verfahrens ist der erste Schwellenwert und/oder der zweite Schwellenwert insbesondere manuell vom Fahrer einstellbar.

Beispielsweise ist das vordefinierte Bremsmoment, insbesondere manuell vom Fahrer einstellbar.

Der Fahrer hat hierdurch die Möglichkeit, den fahrdynamischen Zustand des Fahrzeuges zu beeinflussen, um damit ein bestimmtes Fahrverhalten, bspw. ein sportliches oder komfortables Fahrverhalten, zu erzeugen.

Bei einer Ausgestaltung des erfindungsgemäßen Verfahrens steuert eine Steuereinrichtung die Verzögerungsanordnung in Abhängigkeit eines benutzerspezifischen, in einem Speicher abgelegten Profils an. Dabei ist die Steuereinrichtung insbesondere selbstlernend ausgebildet und das benutzerspezifische Profil wird auf der Grundlage von Bedienungseingaben des Fahrers aktualisiert.

So kann ein langfristiges Profil erstellt werden, durch das eine fahrerspezifische Steuerung optimal gestaltet werden kann.

Gemäß einer Ausführungsform des erfindungsgemäßen Verfahrens wird eine Umfelderkennung zur Erfassung eines Hindernisses in der Umgebung des Kraftfahrzeuges durchgeführt. Dabei wird das vordefinierte Bremsmoment unter Berücksichtigung des Ergebnisses der Umfelderkennung bestimmt.

Die Umfelderkennungseinrichtung kann grundsätzlich beliebig ausgestaltet sein. Beispielsweise kann die Umfelderkennungseinrichtung einen magnetischen Sensor aufweisen, mit dem ein erzeugtes Magnetfeld durch ein zu erkennendes Objekt verändert und diese Veränderung gemessen wird. Ferner sind ultraschallbasierende Umfelderkennungseinrichtungen Stand der Technik. Beispielsweise kann durch die Umfelderkennungseinrichtung eine Annäherung des Kraftfahrzeugs an ein Objekt, bspw. ein anderes Kraftfahrzeug erkannt und eine drohende Kollision verhindert werden.

Es versteht sich, dass Merkmale, Eigenschaften und Vorteile des erfindungsgemäßen Verfahrens auch entsprechend sinngemäß auf die erfindungsgemäß ausgestaltete Steuervorrichtung zutreffen.

### Kurze Beschreibung der Zeichnungen

Fig. 1 zeigt ein Prinzipschaltbild einer Verzögerungsanordnung eines Kraftfahrzeugs zur Durchführung des erfindungsgemäßen Verfahrens; und
Fig. 2 zeigt ein Flussdiagramm eines erfindungsgemäßen Verfahrens.

### Ausführungsformen der Erfindung

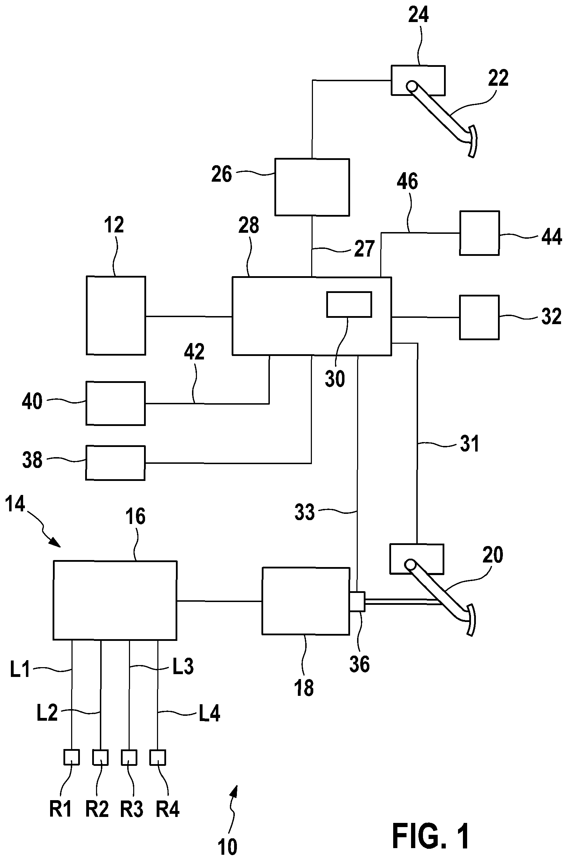

Fig. 1 zeigt ein Prinzipschaltbild einer Verzögerungsanordnung 10 zur Durchführung des erfindungsgemäßen Verfahrens. Die Verzögerungsanordnung 10 ist als ein regeneratives Bremssystem ausgebildet, das neben einer Reibbremsanlage 14 auch einen elektrischen Generator 12 und eine Steuereinheit (Invertersteuergerät) zur Erzeugung von elektrischer Energie aufweist. Der Generator 12 ist beispielsweise zum Antrieb des Kraftfahrzeuges motorisch betreibbar.

Beispielsweise sind nur die beiden (nicht dargestellten) Vorderräder oder die vordere Achse des Kraftfahrzeuges mit dem Generator 12 verbunden. Dabei setzt sich die Gesamtverzögerung des Kraftfahrzeugs bei einem Bremsvorgang aus Verzögerungsanteilen des Generators 12 und der Reibbremsanlage 14 zusammen.

Der für die Reibbremsen R1, R2, R3, R4 benötigte Bremsdruck wird über einen Hauptbremszylinder 16 aufgebracht, der mit einem Bremspedal 20 gekoppelt ist. Zum Aufbau des Bremsdrucks wird vom Hauptbremszylinder 16 Bremsmittel über entsprechende Hydraulikleitungen L1, L2, L3, L4 zu den einzelnen Reibbremsen R1, R2, R3, R4 gedrückt. Dabei ist jede der Reibbremsen R1, R2, R3, R4 einem Fahrzeugrad zugeordnet. Ein Bremskraftverstärker 18 ist zwischen dem Bremspedal 20 und dem Hauptbremszylinder 16 angeordnet und verstärkt, bspw. durch Fremdkraft-Druckluft, eine vom Fahrer aufgebrachte Pedalkraft auf das Bremspedal 20.

Eine Stellung eines Fahrpedals 22 wird durch einen Fahrpedalwegsensor 24 erfasst und an eine Auswerteeinrichtung 26 weitergeleitet. Die Auswerteeinrichtung 26 ist dazu ausgebildet, aus der erfassten Stellung des Fahrpedals 22 die Fahrpedalrücknahmegeschwindigkeit zu ermitteln. Die Auswerteeinrichtung 26 ist ausgangsseitig über eine Datenleitung 27 mit einer Steuereinrichtung 28 zur Steuerung eines automatischen Bremsvorgangs verbunden. Die Steuereinrichtung 28 kann selbstlernend ausgebildet sein. Hierzu ist ein Speicher 30 in der Steuereinrichtung 28 oder außerhalb derselben bzw. in einer Ausführungsvariante auch außerhalb des Fahrzeugs beschreibbar ausgeführt, so dass Steuerprogramme für die Steuereinrichtung 28 auf die individuellen technischen Gegebenheiten ausgelegt und geladen werden können. Dabei enthält das Programm selbstlernende Algorithmen. Die Steuereinrichtung 28 steuert die Verzögerungseinrichtungen 12, 14 in Abhängigkeit eines benutzerspezifischen, in dem Speicher 30 abgelegten Profils. Die Steuereinrichtung 28 aktualisiert laufend das benutzerspezifische Profil aufgrund einer Analyse bestimmter Bedienungseingaben (z.B. das Freigeben des Fahrpedals 22) des Benutzers. Die Steuereinrichtung 28 erkennt somit über längere Zeit das Verhalten des Fahrers.

Der Steuereinrichtung 28 wird über eine Datenleitung 31 ein Signal des Pedalwegs des Bremspedals 20 oder eine korrelierende Größe zugeführt. Die Steuereinrichtung 28 kann über die Steuerleitung 33 ein Schaltventil 36 des Bremskraftverstärkers 18 ansteuern, so dass unabhängig von der Betätigung des Bremspedals 20 ein Bremsdruck aufgebaut werden kann.

Eine Fahrerinformationseinrichtung 38, bspw. ein Display, liefert dem Fahrer Informationen zu Einstellungen, beispielsweise manuellen Einstellungen, zum aktuellen Status der Rekuperationsleistung sowie Informationen zum Bedienkonzept, oder Informationen zur Nutzung desselben zu einem energiesparenden Fahren. Selbstverständlich können die entsprechenden Informationen auch akustisch zur Verfügung gestellt werden.

Mittels einer Sensorik 40, die eine Mehrzahl von Sensoren aufweist, werden Parameter, die eine Fahrsituation des Kraftfahrzeuges charakterisieren, wie beispielsweise Fahrdynamikparameter, erfasst. Über eine Übertragungsleitung 42 werden die Ausgangssignale der Sensorik 40 an die Steuerreinrichtung 28 übertragen.

Eine Umfelderkennungseinrichtung 44 ist über eine Übertragungsleitung 46 mit der Steuereinrichtung 28 verbunden. Die Umfelderkennungseinrichtung 44 weist z.B. eine Kameraeinrichtung zur Generierung von Videosignalen auf, die über die Übertragungsleitung 46 an die Steuereinrichtung 28 übermittelt werden. Dort werden mittels einer Bildverarbeitungseinheit auf der Grundlage einer dreidimensionaler Mustererkennung Objekte, wie vorausfahrende Fahrzeug bzw. vor dem Fahrzeug stehende Fahrzeuge erkannt. Wenn die Steuereinrichtung 28 eine kritische Verkehrssituation, beispielsweise eine drohende Kollision mit einem anderen Fahrzeug erkennt, steuert sie automatisch unter Berücksichtigung der Fahrsituation die Verzögerungseinrichtung 12, 14 an, um das Kraftfahrzeug zu verzögern.

In einem Fahrbetrieb überträgt die Auswerteeinrichtung 26 den von der Auswerteeinrichtung 26 ermittelten Wert der Rücknahmegeschwindigkeit V_{R} des Fahrpedals 22 über die Datenleitung 27 an die Steuereinrichtung 28. In der Steuereinrichtung 28 wird der Wert der Rücknahmegeschwindigkeit V_{R} mit einem oberen Schwellenwert S_{O} und mit einem unteren Schwellenwert S_{O} verglichen. Falls der Wert Rücknahmegeschwindigkeit V_{R} den oberen Schwellenwert S_{O} überschreitet, steuert die Steuereinrichtung 28 den Generator 12 an, und veranlasst diesen dabei zum regenerativen Bremsen. Die Steuereinrichtung 28 gibt dabei ein vordefiniertes Bremsmoment Bₘₐₓ vor, das entsprechend der mittels der Sensorik 40 erfassten jeweiligen Fahrsituation definiert wird. Das vordefinierte Bremsmoment Bₘₐₓ kann auch zeitlich ansteigend verlaufen, um einen höheren Fahrkomfort zu erreichen. Das regenerative Bremsen besteht darin, dass die frei werdende kinetische Energie des Fahrzeuges durch den Generator 12 in elektrische Energie umgewandelt wird. Die beim regenerativen Bremsen aufgebaute elektrische Energie ist umso stärker, je größer das aufgebaute Bremsmoment ist. Die rückgewonnene elektrische Energie kann in Abhängigkeit von der Strategie des Fahrzeugbetriebs für die Ladung eines Akkumulators verwendet werden oder zur Versorgung elektrischer Verbraucher.

Falls der Wert Rücknahmegeschwindigkeit V_{R} den unteren Schwellenwert S_{U} unterschreitet, wird von der Steuereinrichtung 28 das Aufbringen einer Rekuperationsleistung nur unter der Voraussetzung veranlasst, dass das Bremspedal 20 zum Bremsen des Kraftfahrzeugs betätigt wird. Das heißt mit anderen Worten, dass die Steuereinrichtung ein zögerndes Loslassen des Fahrpedals 22 ohne eine Bremspedalbetätigung als Kriterium für den Wunsch des Fahrers wertet, das Fahrzeug ausrollen zulassen.

Falls der Wert der Rücknahmegeschwindigkeit V_{R} den oberen Schwellenwert S_{O} unterschreitet und zugleich einen unteren Schwellenwert S_{U} überschreitet, kann davon ausgegangen werden, dass weder ein Wunsch zu starker Verzögerung, noch der Wunsch eines Ausrollens des Kraftfahrzeuges vorliegt. Deshalb wird in diesem Fall eine vom Fahrer intuitiv nachvollziehbare Steuerung des Rekuperationsmomentes durch das Betätigen des Fahrpedals 22 realisiert. Die Steuereinrichtung 28 variiert hierzu das Rekuperationsmoment z.B. in Abhängigkeit einer Stellung des Fahrpedals 22 durch ein fest vorgegebenes Moment oder eine andere Strategie.

Als Fazit wird der Wertebereich der Rücknahmegeschwindigkeit V_{R} des Fahrpedals 22 beim erfindungsgemäßen Verfahren in drei oder mehr Unterbereiche untergliedert, in denen jeweils ein unterschiedliches Bedienkonzept realisiert ist und zwar im einzelnen in einen ersten Unterbereich mit Rücknahmegeschwindigkeitswerten oberhalb des oberen Schwellenwertes S₀ (V_{R}>S_{O}), einen zweiten Unterbereich, in dem die Rücknahmegeschwindigkeitswerte zwischen dem oberen Schwellenwert S₀ und dem unteren Schwellenwert S_{U} liegen (S_{U}< V_{R}<S_{O}) und in einen dritten Unterbereich mit Rücknahmegeschwindigkeitswerten unterhalb des unteren Schwellenwertes S_{U} (V_{R}<S_{U}). Es versteht sich, dass auch mehr als zwei Unterbereiche der Rücknahmegeschwindigkeiten definiert sein können, in denen unterschiedliche Rekuperationsstufen realisiert werden.

Mittels einer elektronischen Eingabeeinrichtung 32 kann der Nutzer manuell Anpassungen von Parametern, wie z.B. die maximale Rekuperationsstärke oder die Werte für den oberen Schwellenwert S_{O} und/oder den unteren Schwellenwert S_{U} vornehmen. Die so vom Nutzer eingestellten Parameterwerte können zum Beispiel auf dem Display der Fahrerinformationseinrichtung 38 angezeigt werden.

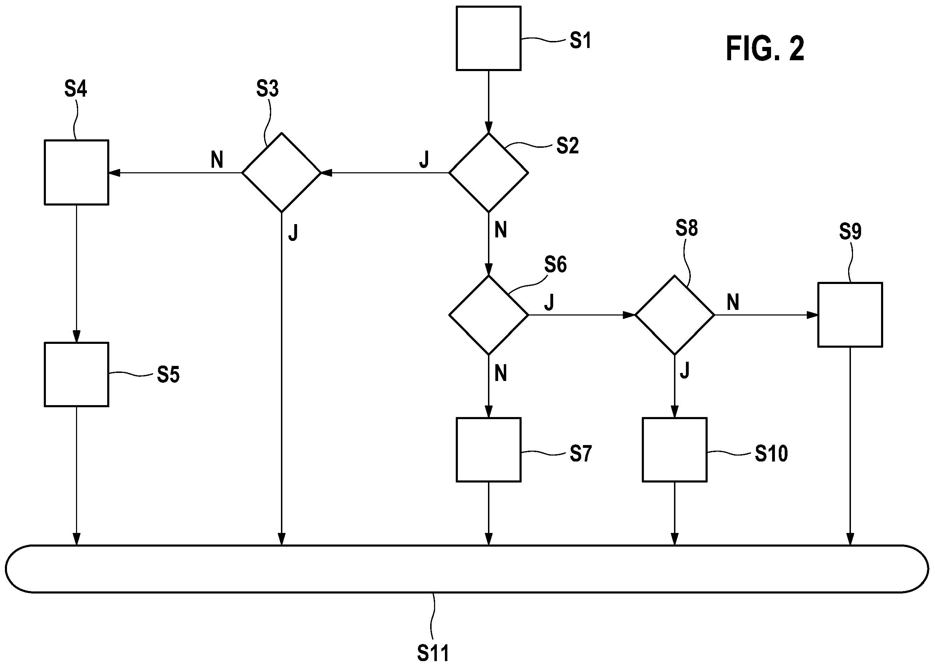

Fig. 2 zeigt ein Flussdiagram einer Ausführungsform eines erfindungsgemäßen Verfahrens.

In einem ersten Schritt S1 wird von der Auswerteeinrichtung 26 eine Fahrpedalrücknahmegeschwindigkeit V_{R} ermittelt. Nach dem Schritt S1 rückt das Verfahren zum Schritt S2 vor. Im Schritt S2 wird geprüft, ob die Fahrpedalrücknahmegeschwindigkeit V_{R} größer oder gemäß einer alternativen Ausführungsform kleiner als der vorgegebene obere Schwellenwert S_{O} ist.

In der Entscheidung S2 verzweigt sich das Verfahren je nachdem, ob das Ergebnis positiv oder negativ ist. Bei einem positiven Ergebnis im Schritt S2 (d.h. die Fahrpedalrücknahmegeschwindigkeit über- oder alternativ unterschreitet den oberen Schwellenwert S_{O}) wird das Verfahren mit dem Schritt S3 fortgesetzt. In Schritt S3 wird geprüft, ob eine Betätigung des Bremspedals 20 vorliegt.

Falls im Schritt S3 festgestellt wurde, dass keine Betätigung des Bremspedals 20 vorliegt, geht das Verfahren zum Schritt S4 über, anderenfalls wird das Verfahren im Beendigungsschritt S11 beendet.

Um eine möglichst hohe Energierückgewinnung bei einer zugleich hohen Fahrstabilität entsprechend der jeweiligen Fahrsituation zu erreichen, wird im Schritt S4 das vordefinierte Bremsmoment Bₘₐₓ für den Generator 12 entsprechend einer Fahrsituation berechnet, da bei unkritischen Fahrsituationen ein höheres Generatorbremsmoment als bei kritischen Fahrsituationen zugelassen bzw. toleriert werden kann. Die Berechnung des vordefinierten Bremsmomentes Bₘₐₓ wird von der Steuereinrichtung 28 durchgeführt. Zur Berechnung des vordefinierten Bremsmomentes Bₘₐₓ aus der gegenwärtigen Fahrsituation, können ein oder mehrere der folgenden Parameter herangezogen und mittels der Sensorik 40 erfasst werden: Die Fahrzeuggeschwindigkeit, die Querbeschleunigungen des Kraftfahrzeuges, die Gierrate des Kraftfahrzeuges, die Schwerpunktlage des Kraftfahrzeuges, Reibwerte der Fahrbahn, Reibwerte der Reifen, um nur eine kleine Auswahl zu nennen. Ferner können Fahrzeugeigenschaften, wie die Ausbildung des Fahrwerks bei der Bestimmung des vordefinierten Bremsmomentes Bₘₐₓ berücksichtigt werden. Dabei sind zur Berechnung des vordefinierten Bremsmomentes Bₘₐₓ verschiedene dem Fachmann bekannte Rechenoperationen zwischen den genannten Parametern oder Einflussfaktoren möglich. Eine geeignete Bestimmung des vordefinierten Bremsmomentes Bₘₐₓ kann alternativ auch anhand von in dem Speicher 30 hinterlegten Kennlinien vorgenommen werden. Bei einem Kraftfahrzeug, das über ein elektronisches Stabilitätsprogramm (ESP) verfügt, können die Signale einer ohnehin vorhandenen ESP-Sensorik zur Bewertung der gegenwärtigen Fahrsituation oder Fahrdynamik ausgewertet werden.

Nach dem Schritt S4, d.h. nach der Berechnung des vordefinierten Bremsmomentes Bₘₐₓ, rückt das Verfahren zum Schritt S5 vor. Im Schritt S5 sendet die Steuereinrichtung 28 entsprechende Steuersignale an den Generator 12 zum Aufbringen des ermittelten vordefinierten Bremsmomentes Bₘₐₓ an den Rädern bzw. der Fahrzeugachse. Mit anderen Worten gibt die Steuereinrichtung 28 im Schritt S5 dem Generator 12 das berechnete vordefinierte Bremsmoment Bₘₐₓ vor.

Nach dem Schritt S5 wird das Verfahren mit dem Beendigungsschritt S11 beendet.

Bei negativem Ergebnis im Schritt S2 geht das Verfahren zum Schritt S6 über. Im Schritt S6 wird geprüft, ob die Rücknahmegeschwindigkeit V_{R} kleiner als der untere Schwellenwert S_{U} ist.

Falls das Prüfungsergebnis im Schritt S6 negativ ist, folgt daraus, dass der gegenwärtige Wert der Fahrpedalrücknahmegeschwindigkeit V_{R} in dem Bereich zwischen dem unteren Schwellenwert S_{U} und dem oberen Schwellenwert S_{O} liegt. In diesem Fall geht das Verfahren zum Schritt S7 über.

Im Schritt S7 wird die Rekuperationsleistung des Generators 12 z.B. in Abhängigkeit einer Stellung des Fahrpedals 22 variiert. Beispielsweise wird ein Auslenkbereich bzw. Stellweg des Fahrpedals 22 in wenigstens zwei Bereiche, einem unteren Bereich und einem oberen Bereich, unterteilt. Im unteren Bereich wird bei einem Hybridfahrzeug bei geschlossener Drosselklappe regenerativ bzw. rekuperativ gebremst. Dabei wird das rekuperative Bremsmoment durch die Fahrpedalauslenkung gesteuert. Im oberen Bereich wird die Drosselklappe in Abhängigkeit der Fahrpedalauslenkung gesteuert.

Nach dem Schritt S7 wird das Verfahren im Beendigungsschritt S11 beendet.

Falls das Prüfungsergebnis in Schritt S6 positiv ist (d.h. der gegenwärtige Wert der Fahrpedalrücknahmegeschwindigkeit ist kleiner als der untere Grenzwert S_{U}), springt das Verfahren zum Schritt S8.

Im Schritt S8 wird geprüft, ob eine Betätigung des Bremspedals 20 vorliegt. Falls im Schritt S8 festgestellt wird, dass keine Betätigung des Bremspedals 20 vorliegt, geht das Verfahren zum Schritt S9 über. Im Schritt S9 erfolgt ein Ausrollen des Kraftfahrzeugs ohne Aufbringung eines Rekuperationsbremsmomentes bis das Fahrzeug in den Stillstand gelangt.

Nach dem Schritt S9 wird das Verfahren bei S11 beendet.

Falls im Schritt S8 festgestellt wird, dass eine Betätigung des Bremspedals vorliegt, geht das Verfahren zum Schritt S10 über. Im Schritt S10 erfolgt eine Ansteuerung der Verzögerungseinrichtungen 12, 14, wobei sich die Gesamtverzögerung aus dem Verzögerungsanteilen der Verzögerungseinrichtung 12, 14 zusammensetzt und insgesamt den Fahrer-Bremswunsch erfüllt.

Nach dem Schritt S10 wird das Verfahren im Beendigungsschritt S11 beendet.

## Patentansprüche

1. Verfahren zur Steuerung einer Verzögerungsanordnung (10) eines Kraftfahrzeugs mit wenigstens einer regenerativen Bremseinrichtung (12), die dazu ausgebildet ist, das Kraftfahrzeug mittels eines variablen Bremsmomentes zu verzögern und elektrische Energie entsprechend des Bremsmomentes zu erzeugen, wobei eine Rücknahmegeschwindigkeit eines Bedienelementes (22) zum Antreiben des Kraftfahrzeuges, insbesondere eines Fahrpedals (22), erfasst wird (S2),
wobei ein vordefiniertes Bremsmoment von der regenerativen Bremseinrichtung (12) ausgeübt wird (S5), sofern die Rücknahmegeschwindigkeit und/oder eine damit korrelierende Größe einen vorbestimmten Schwellenwert über- oder unterschreitet,
**dadurch gekennzeichnet, dass**
ein maximales Bremsmoment von der regenerativen Bremseinrichtung (12) erzeugt wird, sofern die Rücknahmegeschwindigkeit den vorbestimmten Schwellenwert überschreitet
und das Bremsmoment in Abhängigkeit einer Stellung des Bedienelementes (22) zum Antreiben des Kraftfahrzeuges variiert wird (S7), sofern die Rücknahmegeschwindigkeit einen Wert aufweist, der zwischen dem ersten vordefinierten Schwellenwert und einem zweiten vordefinierten Schwellenwert liegt (S6),
und kein Bremsmoment von der regenerativen Bremseinrichtung (12) erzeugt wird, sofern die Rücknahmegeschwindigkeit einen zweiten vordefinierten Schwellenwert unterschreitet
und ein Bremsmoment von der regenerativen Bremseinrichtung (12) zur Erzeugung von elektrischer Energie erzeugt wird, sofern die Rücknahmegeschwindigkeit den zweiten vordefinierten Schwellenwert unterschreitet (S6) und ein Bedienelement, insbesondere ein Bremspedal (20), zum Bremsen des Kraftfahrzeugs betätigt wird (S8)
und wobei der zweite vordefinierte Schwellenwert kleiner ist als der erste vordefinierte Schwellenwert.

2. Verfahren nach Anspruch 1, wobei das vordefinierte Bremsmoment entsprechend einer Fahrsituation des Kraftfahrzeugs bestimmt wird.

3. Verfahren nach Anspruch 1 oder 2, wobei das Kraftfahrzeug durch einen Elektromotor (12) angetrieben wird, der als Bestandteil der regenerativen Bremseinrichtung (12) zum Abbremsen des Kraftfahrzeugs als Generator (12) betreibbar ist.

4. Verfahren nach Anspruch 1, wobei der erste Schwellenwert und/oder der zweite Schwellenwert , insbesondere manuell vom Fahrer einstellbar ist.

5. Verfahren nach einem der Ansprüche 1 bis 4, wobei das vordefinierte Bremsmoment, insbesondere manuell vom Fahrer einstellbar ist.

6. Verfahren nach einem der Ansprüche 1 bis 5, wobei eine Steuereinrichtung (28) die Verzögerungsanordnung (10) in Abhängigkeit eines benutzerspezifischen, in einem Speicher (30) abgelegten Profils ansteuert, wobei die Steuereinrichtung (28), insbesondere selbstlernend ausgebildet ist und das benutzerspezifische Profil auf der Grundlage von Bedienungseingaben des Fahrers aktualisiert wird.

7. Verfahren nach einem der Ansprüche 1 bis 6, wobei eine Umfelderkennung zur Erfassung eines Hindernisses in der Umgebung des Kraftfahrzeuges durchgeführt wird, wobei das vordefinierte Bremsmoment unter Berücksichtigung des Ergebnisses der Umfelderkennung bestimmt wird.

8. Steuervorrichtung für eine Verzögerungsanordnung (10) eines Kraftfahrzeugs, die dazu ausgebildet und eingerichtet ist, das Verfahren nach einem der Ansprüche 1 bis 7 auszuführen.

## Claims

1. Method for controlling a deceleration arrangement (10) of a motor vehicle with at least one regenerative braking device (12), which is designed to decelerate the motor vehicle by means of a variable braking torque and to generate electrical energy according to the braking torque, wherein a speed of return of an operating element (22) for driving the motor vehicle, especially a gas pedal (22), is detected (S2),
wherein a predefined braking torque is exerted (S5) by the regenerative braking device (12) if the speed of return and/or a variable correlated therewith falls below or exceeds a predetermined threshold value,
**characterized in that**
a maximum braking torque is generated by the regenerative braking device (12) if the speed of return exceeds the predetermined threshold value and the braking torque is varied (S7) depending on a position of the operating element (22) for driving the motor vehicle if the speed of return has a value between the first predefined threshold value and a second predefined threshold value (S6),
and no braking torque is generated by the regenerative braking device (12) if the speed of return is below a second predefined threshold value and a braking torque is generated by the regenerative braking device (12) for generating electrical energy if the speed of return is below the second predefined threshold value (S6) and an operating element, especially a brake pedal (20), for braking the motor vehicle is operated (S8) and wherein the second predefined threshold value is less than the first predefined threshold value.

2. Method according to Claim 1, wherein the predefined braking torque is determined according to a driving situation of the motor vehicle.

3. Method according to Claim 1 or 2, wherein the motor vehicle is driven by an electric motor (12), which can be operated as a generator (12) as a component of the regenerative braking device (12) for decelerating the motor vehicle.

4. Method according to Claim 1, wherein the first threshold value and/or the second threshold value can be adjusted, especially manually by the driver.

5. Method according to any one of Claims 1 to 4, wherein the predefined braking torque can be adjusted, especially manually by the driver.

6. Method according to any one of Claims 1 to 5, wherein a control device (28) controls the deceleration arrangement (10) depending on a user-specific profile stored in a memory (30), wherein the control device (28) is especially designed to be self-learning and the user-specific profile is updated based on control inputs by the driver.

7. Method according to any one of Claims 1 to 6, wherein surroundings detection is carried out for detecting an obstruction in the surroundings of the motor vehicle, wherein the predefined braking torque is determined taking into account the result of the surroundings detection.

8. Control device for a deceleration arrangement (10) of a motor vehicle, which is designed and arranged to implement the method according to any one of Claims 1 to 7.

## Revendications

1. Procédé destiné à commander un système de décélération (10) d'un véhicule automobile, comprenant au moins un dispositif de freinage régénératif (12) qui est conçu pour décélérer le véhicule automobile au moyen d'un couple de freinage variable et pour produire de l'énergie électrique correspondant au couple de freinage, dans lequel une vitesse de retour d'un élément de commande (22) destiné à entraîner le véhicule automobile, en particulier d'une pédale d'accélérateur (22), est détectée (S2),
dans lequel un couple de freinage prédéfini est exercé (S5) par le dispositif de freinage régénératif (12) si la vitesse de retour et/ou une grandeur corrélée avec celle-ci passe au-dessus ou en dessous d'une valeur de seuil prédéterminée,
**caractérisé en ce qu'**un couple de freinage maximal est produit par le dispositif de freinage régénératif (12) si la vitesse de retour passe au-dessus de la valeur de seuil prédéterminée
et **en ce que** le couple de freinage est modifié (S7) en fonction d'une position de l'élément de commande (22) destiné à entraîner le véhicule automobile si la vitesse de retour présente une valeur qui se situe (S6) entre la première valeur de seuil prédéfinie et une deuxième valeur de seuil prédéfinie,
et **en ce qu'**aucun couple de freinage n'est produit par le dispositif de freinage régénératif (12) si la vitesse de retour passe en dessous d'une deuxième valeur de seuil prédéfinie
et **en ce qu'**un couple de freinage est produit par le dispositif de freinage régénératif (12) pour produire de l'énergie électrique si la vitesse de retour passe en dessous (S6) de la deuxième valeur de seuil prédéfinie et un élément de commande, en particulier une pédale de frein (20), est activé (S8) pour freiner le véhicule automobile
et dans lequel la deuxième valeur de seuil prédéfinie est inférieure à la première valeur de seuil prédéfinie.

2. Procédé selon la revendication 1, dans lequel le couple de freinage prédéfini est déterminé en fonction d'une situation de conduite du véhicule automobile.

3. Procédé selon la revendication 1 ou 2, dans lequel le véhicule automobile est entraîné par un moteur électrique (12) qui peut être utilisé comme générateur (12) en tant que partie du dispositif de freinage régénératif (12) pour freiner le véhicule automobile.

4. Procédé selon la revendication 1, dans lequel la première valeur seuil et/ou la deuxième valeur seuil est réglable par le conducteur, en particulier manuellement.

5. Procédé selon l'une des revendications 1 à 4, dans lequel le couple de freinage prédéfini est réglable par le conducteur, en particulier manuellement.

6. Procédé selon l'une des revendications 1 à 5, dans lequel un dispositif de commande (28) commande le dispositif de décélération (10) en fonction d'un profil spécifique de l'utilisateur stocké dans une mémoire (30), dans lequel le dispositif de commande (28) est conçu en particulier pour un auto-apprentissage et le profil spécifique de l'utilisateur est mis à jour sur la base des entrées de commande du conducteur.

7. Procédé selon l'une des revendications 1 à 6, dans lequel une détection d'environnement est effectuée pour détecter un obstacle dans l'environnement du véhicule automobile, dans lequel le couple de freinage prédéfini est déterminé en tenant compte du résultat de la détection d'environnement.

8. Dispositif de commande destiné à un système de décélération (10) d'un véhicule automobile, qui est réalisé et conçu pour mettre en oeuvre le procédé selon l'une des revendications 1 à 7.
